# EUROPEAN PATENT APPLICATION

(11) **EP 4 368 664 A1**
(43) Date of publication of application: **15.05.2024**
(21) Application number: 22206753.0
(22) Date of filing: 10.11.2022
(51) Int. Cl.: C08K 3/32, C08K 5/1515, C08K 5/3412, C08K 5/51, C08L 67/02

(54) **POLYMER COMPOSITION AND SHAPED ARTICLES WITH INCREASED RESISTANCE TO HYDROLYSIS AND ENHANCED COMPARATIVE TRACKING INDEX**

(71) Applicant: Sipchem InnoVent SA, 1095 Lutry (CH)
(72) Inventor: Martin, Cyril, 1772 Grolley (CH); Arpin, Thierry, 6984 Pura (CH)
(74) Representative: Hepp Wenger Ryffel AG

(57) **Abstract**

A polymer composition for applications requiring increased hydrolytic stability and/or enhanced comparative tracking indices, the composition comprising at least one semi-aromatic polyester resin, at least one epoxy-containing compound, at least one *bis-*lactam, and at least one phosphorus-containing compound.

## Description

The present invention relates to a polymer composition, a shaped article, an electronic or electrical apparatus, a method of manufacturing a shaped article, and the use of a polymer composition as disclosed herein for increasing the hydrolytic stability and/or enhancing the comparative tracking index rating of articles manufactured therefrom according to the independent claims.

Polycondensation polymers such as polyesters are prone to degradation via hydrolysis under moist conditions and at elevated temperatures. Conditions of this type arise mainly during thermomechanical processing of the polymers with heating and with simultaneous presence of moisture but can also take place during the subsequent use of the resulting products. Hydrolysis of polyesters leads to polymers with reduced molecular weight and to a decrease in melt viscosity with simultaneous impairment of the mechanical properties of the polymers. Said effects severely restrict the usefulness of polyesters and moreover incur high drying cost prior to polymer processing. Thus, there is still an increasing demand for polyesters as engineering thermoplastics, which feature a higher resistance to hydrolysis compared to currently available compositions or those described in the prior art.

To restore the mechanical and rheological properties impaired by hydrolytic degradation during thermos-mechanical processing, chain extenders are used. Chain extenders are multifunctional compounds that link the end groups of polymer segments together, which results in a higher molecular weight polymer. The reactivity of chain extenders should be so high that the reaction takes place within a short time, preferably fast enough to perform this step during extrusion. A large number of chain extenders with different kinds of reactions have been developed for polyesters in the past and are known from the state of the art.

By way of example, WO 98/47940 A1 describes bifunctional caprolactam chain extenders for producing high molecular weight polyesters. Similarly, U.S. Pat. No. 3,657,191 discloses a composition containing linear polyester and bis-epoxy compounds with terminal epoxy groups for increasing the molecular weight of the polyester. Since the reactivity of these chain extenders with carboxyl end groups of polyesters is very high under extrusion conditions, such compounds often bear the disadvantage of causing branched products and/or significant, abrupt molecular weight increases during extrusion. This holds in particular true when these chain extenders are incorporated at the high levels necessitated by current hydrolysis resistance requirements. Naturally, the often unforeseeable viscosity increases associated with the increase in molecular weight also have a detrimental effect on the performance manufacturing operations such as injection molding. Moreover, the stabilizing effect is based more on an initial increase in molecular weight due to chain extension than on hydrolysis protection that also exists in the final product and over the lifetime of the same.

In order to extend their range of application, polyesters are frequently reinforced with reinforcing agents such as glass fibers. However, this is detrimental to their electrical insulation properties and favors electrical tracking. Electrical tracking is the formation of conductive pathways on the surface of a polymer under certain conditions and at a certain voltage. Electrical tracking in a polymer can be a source of fire and/or breakage of parts. Therefore, resistance to electrical tracking is often an important safety requirement for a material used in certain electrical or electronic applications. A common method of reporting the electrical tracking resistance of a polymer is by its comparative tracking index rating (CTI).

For example, as disclosed in EP 3 323 854 B1, polybutylene terephthalate (PBT) resins themselves have a very high comparative tracking index (CTI) of 600 V. However, when PBT is compounded with various fillers such as stabilizers, flame retardants or reinforcing glass fibers to improve mechanical properties, its tracking resistance deteriorates significantly depending on the amount of filler added, to e.g. 325 V or even lower. However, some applications can require a material having a higher comparative tracking index.

It is an object of the present invention to overcome these and other drawbacks of the prior art and in particular to provide a polymer composition and a shaped article comprising such a polymer composition that feature increased stability against hydrolysis and/or enhanced tracking resistance. In particular, it is an object of the present invention to provide semi-aromatic polyester resins with increased stability against hydrolysis and with enhanced tracking resistance. Further objects of the present invention are to provide an electronic or electric apparatus comprising or essentially consisting of a polymer composition as disclosed herein, and to propose the use of a polymer composition as disclosed herein for increasing the hydrolytic stability and/or enhancing the comparative tracking index rating of articles manufactured therefrom.

These and other objects are solved with a polymer composition, a shaped article, an electronic or electrical apparatus, a method of manufacturing, and the use of a polymer composition as disclosed herein according to the independent claims. Advantageous embodiments are subject of the dependent claims.

The polymer composition according to the present invention comprises at least one semi-aromatic polyester resin, at least one epoxy-containing compound, at least one bis-lactam, and at least one phosphorus-containing compound.

An epoxy-containing compound as used herein is understood to be a compound comprising at least one epoxide functional group. In particular, the epoxy-containing compounds have a molecular weight of less than 3000 g/mol, preferably of less than 1500 g/mol, and are not polymeric.

A preferred epoxy-containing compound comprises at least three epoxy groups per molecule of the compound, more preferably at least four epoxy groups per molecule of the compound, and most preferably at least six epoxy groups per molecule of the compound. The epoxy-containing compound may be polymeric or non-polymeric, with non-polymeric being preferred.

Semi-aromatic polyesters, i.e. polyesters constructed from one aromatic monomer and one aliphatic monomer, are known to the skilled person and can generally be described according to the following structural formula (1):

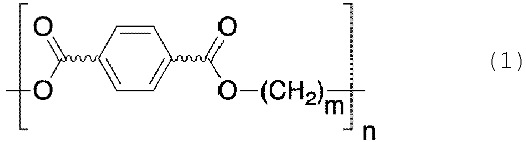

As is known to the skilled person, lactams are cyclic amides. The lactam structural motif can be represented according to the following structural formula (2):

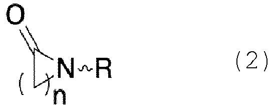

In the illustrated structural formula (1), n indicates the lactam ring size, with n being typically an integer of 1 to 5, wherein the resulting lactams are referred to as α-lactams (three-membered ring), β-lactams (four-membered ring), γ-lactams (five-membered ring), δ-lactams (six-membered ring), and ε-lactams (seven-membered ring), respectively.

Consequently, a bis-lactam is understood to be any compound having the formula (3):

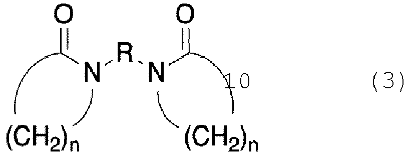

Therein, n is an integer of between 1 and 15, preferably between 4 and 10, most preferably 5, and R is any functional group or residue linking the lactam rings, in particular a carbonyl group. It is also conceivable that at least one of the lactam rings of the bis-lactam is substituted and/or fused (condensed) to further rings. The synthesis of compounds according to formula (3) is described in WO 98/47940.

Specific representatives of bis-lactams that may be used according to the present invention are bis-N-acyllactams having the formula (4):

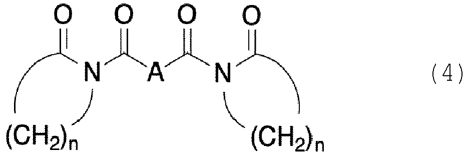

Therein, n is an integer of between 1 and 15, preferably between 4 and 10, most preferably 5, and A is selected from alkyl groups, such as alkylenediamines, in particular hexamethylenediamine, or aromatic groups. The synthesis of compounds according to formula (4) is described in EP 0 286 253 A2.

A phosphorus-containing compound as used herein is in particular understood to be a metal phosphate, a metal phosphonate or a metal phosphinate, preferably a metal phosphate. In particular, a metal phosphate for use in the present invention is calcium hydrogen phosphate.

It has now been surprisingly found that such a polymer composition confers enhanced hydrolytic stability and excellent comparative tracking indices to semi-aromatic polyester resins. This is contrary to expectations, in particular with respect to hydrolysis stability, as previous publications such as EP 2 184 311 A1 report that the use of carbonyl-bis-caprolactam and other carbonyllactams in polyesters leads to increased hydrolysis rates rather than an improvement in hydrolytic stability of the respective polyester films. To the contrary, the present inventors have not only found that the use of bis-lactams - and especially N,N'-hexane-1,6-diylbis(hexahydro-2-oxo-1H-azepine-1-carboxamide), hereinafter "CBA" - does not preclude one from obtaining polyesters with improved hydrolytic stability, but furthermore, that the use of CBA also helps to obtain polyesters with enhanced tracking resistance.

Without wishing to be bound by theory, addition of a carboxylic acid group to an epoxy group leads to the formation of the respective hydroxyalkyl ester. The hydroxyl group of said hydroxyalkyl ester may in turn be captured by reaction with one or both of the bis-lactam and the metal phosphate.

In a preferred embodiment of the polymer composition according to the present invention, at least one of the epoxy-containing compounds is an epoxidized fatty acid ester.

The use of epoxidized fatty acid esters is preferred because these compounds are not suspected to be toxic, feature high temperature stability and a migration behavior in the polymer matrix, which can be adjusted via the acid used. Furthermore, since they are based on renewable raw materials, their use is also preferred from the point of view of sustainability and environmental protection.

The fatty acid ester of said epoxidized fatty acid ester may preferably be selected from linseed oil, soybean oil, sunflower seed oil, safflower oil, hempseed oil, tung oil, oiticica oil, corn oil, sesame oil, cottonseed oil, castor oil, olive oil, peanut oil, rapeseed oil, coconut oil, babassu oil, palm oil, fish oil. Most preferably, the epoxidized fatty acid ester is epoxidized linseed oil. Epoxidized linseed oil may be represented by the following exemplary structure (5):

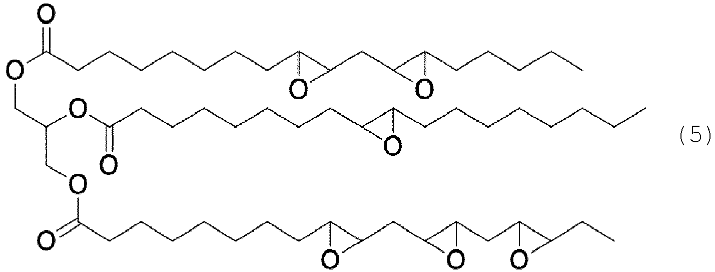

Epoxidized linseed oil (ELO; CAS No. 8016-11-3) is available, for example, from Valtris Specialty Chemicals under the trade name Lankroflex^{™} L.

Epoxidized linseed oil was found to be particularly suitable and effective in enhancing the hydrolytic stability while allowing for excellent comparative tracking resistance indices of semi-aromatic polyester resins.

In a preferred embodiment of the polymer composition according to the present invention, at least one of said bis-lactams in the polymer composition is carbonyl-bis-caprolactam or N,N'-hexane-1,6-diylbis(hexahydro-2-oxo-1H-azepine-1-carboxamide) or both. CBA (CAS No. 5888-87-9) is readily available and sold as a polymerization activator under the Bruggolen^{®} brand name by Brüggemann. It is in the form of pellets that melt at above 70 °C which allows for dust-free and safe processing.

In a preferred embodiment, the polymer composition disclosed herein comprises at least one semi-aromatic polyester resin selected from the group consisting of polyethylene terephthalate (PET), polybutylene terephthalate (PBT), and copolyesters thereof, the at least one epoxy-containing compound is at least one epoxidized fatty acid ester, the at least one bis-lactam is one or both of carbonyl-bis-caprolactam and N,N'-hexane-1,6-diylbis(hexahydro-2-oxo-1H-azepine-1-carboxamide), and the at least one phosphorus-containing compound is one or both of calcium hydrogen phosphate and hydroxyapatite.

Such polymer compositions are characterized by both an exceptionally high tracking resistance and excellent hydrolytic stability.

It is particularly preferred if the polymer composition comprises epoxidized linseed oil, N,N'-hexane-1,6-diylbis(hexahydro-2-oxo-1H-azepine-1-carboxamide), and calcium hydrogen phosphate.

As will be explained in detail in the comparative experiments, the polymer compositions comprising epoxidized linseed oil, N,N'-hexane-1,6-diylbis(hexahydro-2-oxo-1H-azepine-1-carboxamide) (CBA), and calcium hydrogen phosphate exhibit particularly good hydrolysis resistance and tracking resistance.

In a preferred embodiment of the polymer composition disclosed herein, at least one of said phosphorus-containing compounds is selected from the group consisting of a metal phosphate, a metal phosphonate and a metal phosphinate. In a particularly preferred embodiment of the polymer composition disclosed herein, the phosphorus-containing compound is at least one of calcium hydrogen phosphate and hydroxyapatite.

The total amount of epoxy-containing compounds in the polymer composition may be 0.1 to 5 weight percent, based on the total weight of the polymer composition. Preferably, the total amount of epoxy-containing compounds in the polymer composition is 0.5 to 3 weight percent, based on the total weight of the polymer composition. In particular, the total amount of epoxidized fatty acid esters in the polymer composition may be 0.1 to 5 weight percent, preferably 0.5 to 3 weight percent, based on the total weight of the polymer composition.

In the aforementioned ranges, a noticeable chain-extending effect occurs without the tendency to gel formation getting out of hand.

Additionally, or alternatively, the total amount of bis-lactams in the polymer composition may be 0.1 to 5 weight percent, based on the total weight of the polymer composition. Preferably, the total amount of bis-lactams in the polymer composition is 0.5 to 2 weight percent, based on the total weight of the polymer composition. In particular, the total amount of one or both of carbonyl-bis-caprolactam and N,N'-hexane-1,6-diylbis(hexahydro-2-oxo-1H-azepine-1-carboxamide) in the polymer composition may be 0.1 to 5 weight percent, preferably 0.5 to 2 weight percent, based on the total weight of the polymer composition.

Below 0.1 weight percent the effect is too small and amounts of more than 5 weight percent result is gelation and an abrupt viscosity rise during extrusion. In particular, it was found that the performance, i.e. the hydrolytic stability and comparative tracking index (CTI) rating, of polymer compositions according to the present invention was best if the total amount of *bis-*lactams in the polymer composition is 0.5 to 2 weight percent, based on the total weight of the polymer composition, since at higher bis-lactam contents in particular the comparative tracking index (CTI) ratings of the resulting polymer compositions were found to decrease.

Additionally, or alternatively, the total amount of phosphorus-containing compound in the polymer composition may be 0.1 to 5 weight percent, based on the total weight of the polymer composition. Preferably, the total amount of phosphorus-containing compound in the polymer composition is 0.1 to 2.5 weight percent, based on the total weight of the polymer composition. In particular, the total amount of one or both of calcium hydrogen phosphate and hydroxyapatite in the polymer composition may be 0.1 to 5 weight percent, preferably 0.1 to 2.5 weight percent, based on the total weight of the polymer composition.

The at least one semi-aromatic polyester resin, i.e. the total of semi-aromatic polyester resins comprised in the polymer composition, may be present in an amount of 40 to 90 weight percent, preferably 50 to 80 weight percent, based on the total weight of the polymer composition.

The above quantity ranges allow further fillers and additives to be added as required in amounts needed for them to take effect.

The semi-aromatic polyesters used with the present invention generally comprise condensation products of aromatic dicarboxylic acids generally having 8 to 14 carbon atoms and at least one glycol selected from the group consisting of neopentyl glycol, cyclohexane dimethanol and aliphatic glycols of the formula HO(CH₂)ₙ OH where *n* is an integer of 2 to 10.

Preferred semi-aromatic polyester resins include polyesters selected from the group consisting of polyethylene terephthalate (PET), polybutylene terephthalate (PBT), polyethylene naphthalate (PEN), polycyclohexylenedimethylene terephthalate (PCT), polytrimethylene terephthalate (PTT), and copolyesters thereof.

The term "copolyester" means a polyester that is produced by polymerization of a first monomer and a further a comonomer which may be a diacid component and/or a diol component, thereby producing a diacid modification and/or a diol modification.

Most preferably, the at least one semi-aromatic polyester resin is selected from the group consisting of polyethylene terephthalate (PET) homopolymers, polybutylene terephthalate (PBT) homopolymers, polyethylene terephthalate/polybutylene terephthalate copolymers, polyethylene terephthalate copolymers, polybutylene terephthalate copolymers, mixtures of polyethylene terephthalate and polybutylene terephthalate and/or mixtures thereof.

These preferred polyesters are particularly preferred from the viewpoint of adaptability to electric and electronic parts having heat resistance, heat aging resistance, and a generally favorable balance among properties, moldability and economic efficiency.

The polymer composition may additionally comprise at least one reinforcing agent. The reinforcing agent may preferably be present in the polymer composition in an amount of 5 to 80 weight percent, based on the total weight of the polymer composition. The reinforcing agent may more preferably be present in the polymer composition in an amount of 10 to 50 weight percent and most preferably of 25 to 40 weight percent, based on the total weight of the polymer composition. A high content, especially of 50 weight percent or more, of reinforcing agent in the polymer composition is particularly relevant when the polymer composition is used in composite materials that are not injection molded.

Preferably, the reinforcing agent is selected from the group consisting of mineral fillers and natural fillers. In particular, the mineral filler may be at least one of whiskers, kaolin, calcined kaolin, wollastonite, talc, chalk, glass fibers, glass beads, amorphous silica, asbestos, calcium silicate, calcium metasilicate, magnesium carbonate, powdered quartz, mica, barium sulfate, and feldspar. Most preferably, the mineral filler may be glass fibers. The natural filler may preferably be kenaf.

Fiber reinforced polyester has higher strength at all temperatures compared to the unreinforced polyester matrix. It was observed that the thermo-mechanical properties of the polymer compositions disclosed herein, in particular the tensile strength and modulus of elasticity, increased when the fiber volume content is increased up to 50 weight percent, based on the total weight of the polymer composition. However, these properties decreased at the fiber content higher than that of 50 weight percent, based on the total weight of the polymer composition. On the other hand, tensile elongation and impact energy values decreased when the fiber content was increased. All in all, the addition of reinforcing agents in an amount of 10 to 50 weight percent, based on the total weight of the polymer composition, constitutes a suitable range for effectively improving the thermo-mechanical properties of the polymer compositions disclosed herein. This range can even be broadened to 5 to 80 weight percent, based on the total weight of the polymer composition, in case of composite materials that are not for injection molding, such as profile or film extrusion, pultrusion, prepreg, vacuum molding or compression molding.

The glass fibers to be used together with the polymer compositions disclosed herein may be conventional glass fibers known in the art. There are no particular limitations on the cut length, the diameter or the shape of the glass fibers. For example, the glass fibers may be cylindrical fibers, cocoon-shaped fibers, and fibers having an oval-shaped cross-section. There are also no particular limitations on the glass cutting method used when cutting glass strands or glass roving into chopped strands of a prescribed length.

There are also no particular limitations on the variety of glass used, but in terms of quality, either E-glass or corrosion-resistant glass containing the element zirconium within the glass composition can be used particularly favorably.

Further, in order to improve the interface characteristics between the glass fiber and the resin matrix, glass fiber that has been surface-treated with an organic treatment agent (surface treatment agent) such as a silane compound including an aminosilane compound or an epoxy compound can be used favorably. There are no particular limitations on this surface treatment agent, and any conventional surface treatment agent can be used favorably.

In general, the polymer compositions disclosed herein, comprising a combination of at least one epoxy-containing compound and at least one bis-lactam, are already characterized by comparatively high impact strength, which can be further increased by the use of toughening agents known per se.

In some embodiments, the polymer composition additionally comprises 0.5 to 15 weight percent, based on the total weight of the polymer composition, of at least one toughening agent.

A "toughening agent" as used herein is understood to be an agent that, when added to the semi-aromatic polyester resin, increases the impact strength of an injection molded element essentially consisting of said semi-aromatic polyester resin, in particular when the impact strength is measured using the "Charpy notched impact strength test" according to ISO 179.

The toughening agent, also known as impact modifier, may be a reactive toughening agent or it may be a non-reactive toughening agent. In some embodiments, the polymer composition may comprise both reactive and non-reactive toughening agents. Preferably, the polymer composition according to the present invention comprises a reactive toughening agent.

Reactive toughening agents are preferred for strengthening of polyesters since these form a stable dispersed phase by grafting to the polyester matrix. By contrast, non-reactive toughening agents can be dispersed into polyester resins by intensive compounding but may coalesce downstream in the compounder.

Preferably, the toughening agent is selected from the group consisting of glass fibers, methacrylate-butadiene-styrene copolymers, acrylate elastomers, acrylonitrile-styrene-acrylate copolymers, acrylonitrile-butadiene-styrene copolymers, high rubber graft acrylonitrile-butadiene-styrene copolymers, acrylate-olefin copolymers, silicone rubbers, silicone-acrylic rubbers, ethylene-propylene non-conjugated diene elastomers, acrylonitrile-styrene-ethylene-propylene non-conjugated diene elastomers, ethylene-methyl methacrylate-glycidyl methacrylate copolymers, ethylene-n-butyl-acrylate-co-glycidyl methacrylate (EBA-GMA) terpolymer rubber, and combinations thereof. Even more preferably, the toughening agent is selected from the group consisting of methacrylate-butadiene-styrene copolymers, acrylate-olefin copolymers, ethylene-methyl methacrylate-glycidyl methacrylate copolymers, ethylene-n-butyl-acrylate-co-glycidyl methacrylate (EBA-GMA) terpolymer rubber, and combinations thereof.

The above-mentioned toughening agents have proven to be particularly suitable, since they are generally readily available and impart polyester resins with particularly high impact strength when measured according to the "Charpy notched test" (ISO 179).

The comparative tracking index (CTI) rating of the polymer composition may be at least 450 V. Preferably, the comparative tracking index (CTI) rating of the polymer composition is at least 550 V. In particular, the comparative tracking index (CTI) rating of the polymer composition disclosed herein and comprising 5 to 80 weight percent, preferably 10 to 50 weight percent, most preferably 25 to 40 weight percent, of glass fibers, based on the total weight of the polymer composition, is at least 450 V, preferably at least 550 V.

The CTI can be determined using the measurement method prescribed in the third edition of IEC (International Electrotechnical Commission) 60112. Specifically, the CTI is measured using a 0.1% by mass aqueous solution of ammonium chloride and a platinum electrode. A prescribed number of drops (100 drops) of this aqueous solution of ammonium chloride is dripped onto each test piece, and the voltage at which none of the test pieces (n=S) undergoes breakdown is determined and recorded as the CTI.

One or more conventional additives may be added to the polymer compositions disclosed herein. For instance, a flame retardant and flame-retardant synergist may be added for the purpose of improving flame retardancy. Due to their plasticizing effect, thermal stability and dual use as nucleating agents in semi-aromatic polyester resins, preferred flame retardants to be used together with the present invention are phosphorus-containing flame retardants such as metal phosphates, metal phosphonates and metal phosphinates. Additionally or alternatively, an antioxidant and heat stabilizer may be added for the purpose of improving heat resistance. UV stabilizers may be added for the purpose of reducing degradation and discoloration. Other additives include fillers, inert fillers, viscosity modifiers, nucleating agents, colorants and dyes, lubricants, plasticizers, and mold release agents.

In a particular embodiment, the polymer composition may essentially consist of:
- 40 to 89 weight percent of at least one semi-aromatic polyester resin;
- 5 to 80 weight percent, preferably 10 to 50 weight percent, most preferably 25 to 40 weight percent, of at least one reinforcing agent, in particular glass fibers;
- 0.1 to 5 weight percent, preferably 0.5 to 2 weight percent, of at least one bis-lactam, in particular carbonyl-bis-caprolactam or N,N'-hexane-1,6-diylbis(hexahydro-2-oxo-1H-azepine-1-carboxamide) or both;
- 0.1 to 5 weight percent, preferably 0.5 to 3 weight percent, of at least one epoxy-containing compound, in particular at least one epoxidized fatty acid ester, preferably epoxidized linseed oil; and
- 0.1 to 5 weight percent, preferably 0.1 to 2.5 weight percent, of at least one phosphorus-containing compound, in particular at least one metal phosphate;
each based on the total weight of the polymer composition.

Optionally, the above embodiment may include an additional 0.5 to 15 weight percent of at least one toughening agent. Again, weight percentages refer to the total weight of the polymer compositions, including toughening agent.

Such a polymer composition features both enhanced hydrolytic stability and excellent tracking resistance. Moreover, such a polymer composition is very stable and unlikely to suffer dielectric breakdown, and can therefore be used favorably for the manufacture of electric or electronic articles that are subjected to extreme usage conditions.

The metal phosphate may preferably be at least one of calcium hydrogen phosphate (CaHPO₄) and hydroxyapatite (Ca₅(PO₄)₃OH) for their nontoxicity, generally ready availability and effectiveness as flame retardants. In addition, the present inventors have found that the aforementioned metal phosphates afford a higher comparative tracking index and improved hydrolytic stability of the polymer compositions disclosed herein.

The object is further solved with a shaped article comprising a polymer composition as disclosed herein.

The term "shaped article" as used herein includes, in particular, bulk material for melting in an extruder. Such bulk material is also known to the skilled person under the terms granules or pellets.

In many cases, it is desirable for molded objects or the granules from which they are formed to be colored. For use in electrical applications, polymer compositions having orange, red, green, blue, dark gray or black color are frequently used, for example, to label or classify products.

Hence, the shaped article may further comprise one or a combination of organic and inorganic pigment. The pigment may in particular be carbon black.

It is desirable to add carbon black as a pigment to provide a dark gray or black color. The problem occurring after the addition of carbon black, i.e. the decrease in the comparative tracking index rating and the occurrence of tracking at lower voltages, respectively, is mitigated by the polymer compositions disclosed herein.

The shaped articles disclosed herein may be used alone as molding granules or mixed with other polymers. The granules may be used to produce fibers, films, and coatings as well as injection molded or extruded articles, particularly for end use applications where enhanced resistance against hydrolysis is desired. However, in a particular embodiment of the present invention, the shaped articles disclosed herein are not used to produce polyester films.

Molding of the polymer compositions disclosed herein into shaped articles or parts can be carried out according to methods known to those skilled in the art. Preferred are generally utilized molding methods such as injection molding, extruding molding, pressing molding, foaming molding, blow molding, vacuum molding, injection blow molding, rotation molding, calendar molding and solution casting molding.

The object is further solved with an electronic or electrical apparatus containing a component comprising or essentially consisting of a polymer composition as disclosed herein.

The electronic or electrical apparatus may be a charging gun, an inverter, a circuit breaker, a sensor, a relay, a solenoid, a high voltage connector and/or a switch.

The beneficial effects of such articles and electronic or electrical apparatuses are essentially the same as those already described for the polymer compositions disclosed herein.

The object is further solved with a method of manufacturing a shaped article comprising a polymer composition with at least one epoxidized fatty acid ester as disclosed herein.

In general, the polymer compositions disclosed herein can be obtained by blending all of the component materials using any blending method. The components are preferably mixed and made as homogeneous as possible. As a specific example, all of the component materials are mixed to homogeneity using a mixer such as a blender, kneader, roll extruder, etc. to give a polymer resin composition. Alternatively, part of the materials may be mixed in a mixer, and the rest of the materials may then be added and further mixed until homogeneous. Further alternatively, the materials may be dry-blended in advance, and a heated extruder is then used to melt and knead until homogeneous, and then to extrude in a strand shape, followed by cutting to a desirable length to become pellets. The latter method may in particular be used to prepare master batches that can be mixed with more polymer resin at a later point in time.

However, according to the method of manufacturing disclosed herein, the epoxidized fatty acid ester, in particular epoxidized linseed oil, and the bis-lactam, in particular carbonyl-bis-caprolactam and/or N,N'-hexane-1,6-diylbis(hexahydro-2-oxo-1H-azepine-1-carboxamide), are added to and melted together with at least one of the at least one semi-aromatic polyester resins disclosed herein. The at least one phosphorus-containing compound present in the polymer compositions disclosed herein may be added to the mixture comprising the epoxidized fatty acid ester, the bis-lactam and the semi-aromatic polyester resin or added to and melted together with at least one of the at least one semi-aromatic polyester resins disclosed herein.

Preferably, the epoxidized fatty acid ester and the bis-lactam are premixed and added to and melted together with at least one of the at least one semi-aromatic polyester resins of the polymer composition disclosed herein.

This way, a sudden increase in viscosity during extrusion can be avoided particularly effectively since both compounds are present in the extruder at the same time and are available for the total amount of the semi-aromatic polyester resin of the composition.

The object is further solved with the use of a polymer composition as disclosed herein for increasing the hydrolytic stability and/or for enhancing the comparative tracking index (CTI) rating of articles manufactured therefrom.

In particular, the object is solved with the use of a polymer composition comprising at least one epoxidized fatty acid ester, at least one of carbonyl-bis-caprolactam and N,N'-hexane-1,6-diylbis(hexahydro-2-oxo-1H-azepine-1-carboxamide), and at least one of calcium hydrogen phosphate and hydroxyapatite as disclosed herein for increasing the hydrolytic stability and/or for enhancing the comparative tracking index (CTI) rating of articles manufactured therefrom.

### Comparative examples

The following comparative examples are intended to exemplify the inventive effect of the present invention. Unless otherwise indicated, all quantities are based on the total weight of the respective compositions.

| | **REF** | **1** | **2** | **3** | **4** | **5** | **6** | **INV** |
|---|---|---|---|---|---|---|---|---|
| PBT resin 1 | 63.00 | 62.50 | 62.50 | 61.50 | 62.00 | 61.00 | 61.00 | 60.50 |
| PBT resin 2 | 6.00 | 6.00 | 6.00 | 6.00 | 6.00 | 6.00 | 6.00 | 6.00 |
| Glass fibers | 30.00 | 30.00 | 30.00 | 30.00 | 30.00 | 30.00 | 30.00 | 30.00 |
| Antioxidant | 0.50 | 0.50 | 0.50 | 0.50 | 0.50 | 0.50 | 0.50 | 0.50 |
| Mold release | 0.50 | 0.50 | 0.50 | 0.50 | 0.50 | 0.50 | 0.50 | 0.50 |
| ELO | - | - | - | 1.50 | - | 1.50 | 1.50 | 1.50 |
| CaHPO₄ | - | 0.50 | - | - | 0.50 | 0.50 | - | 0.50 |
| CBA C20P | - | - | 0.50 | - | 0.50 | - | 0.50 | 0.50 |

The materials used in the above comparative examples were:
PBT resin 1: PBT-R1-D0-035, a neat PBT resin with medium viscosity (MFR (250 °C/2.16 kg) 35 g/10 min, measured by ASTM D1238) available from Sipchem.
PBT resin 2: PBT-R1-G6-010, a neat PBT resin with high viscosity (MFR (250 °C/2.16 kg) 10 g/10 min, measured by ASTM D1238) available from Sipchem.
Glass fibers: ECS 03 T-187H available from Nippon Electric Glass. The chopped strands from E-glass are designed for reinforcement of engineering thermoplastics such as PBT and PET.
Antioxidant: Phenolic antioxidant pentaerythritol tetrakis[3-[3,5-di-tert-butyl-4-hydroxyphenyl]propionate (CAS Number 6683-19-8) available under the trade name Irganox^{®} 1010 from BASF.
Mold release agent: PETS L342, pentaerithritol tetrastearate, available from Faci.
ELO: Epoxidized linseed oil (CAS Number 8016-11-3) available from Valtris Specialty Chemicals under the trade name Lank-roflex^{™} L.
CaHPO₄: A highly compactable directly compressible porous dibasic anhydrous calcium phosphate (Calcium Hydrogen Phosphate) available from Sigma Aldrich.
CBA C20P: Bruggolen^{®} C20P, N,N'-hexane-1,6-diylbis(hexahydro-2-oxo-1H-azepine-1-carboxamide (CAS Number 5888-87-9) available from Brüggemann.

### Methods

The formulations listed in the table above were investigated for their thermo-mechanical properties and tracking resistance.

A 40 mm twin screw extruder with a screw design suitable for glass fiber reinforced PBT compound was used for melting the formulations. The temperature profile of the extruder's heating zones was 255 °C - 255 °C - 255 °C - 255 °C - 250 °C - 250 °C - 250 °C - 250 °C (in conveying direction) and the screw speed was 320 - 420 RPM and an output of approximately 120 to 150 kg per hour. The temperature of the mold used to produce the tensile bars by injection molding was set at 90 °C.

The melt flow index (MFI) of the formulations was determined according to ISO 1133 at 250 °C and 5 kg.

Tensile properties were measured according to ISO 527-2. Hydrolysis resistance was determined by exposing tensile bars for 96 hours in steam using a pressure cooker at 121 °C. The table below refers to this test as the "pressure cooker test" (PCT). The exposed bars were then held at ambient conditions for at least 24 hours and tensile properties were subsequently determined according to ISO 527-2 as above. Relative resistance of the formulations to tracking, i.e. the comparative tracking index (CTI), was determined according to IEC60112.

### Results

If the above formulations are measured according to the methods defined herein, the following values are obtained:

| | **REF** | **1** | **2** | **3** | **4** | **5** | **6** | **INV** |
|---|---|---|---|---|---|---|---|---|
| **Dry as molded** | | | | | | | | |
| Stress at break [MPa] | 127 | 135 | 139 | 136 | 141 | 138 | 137 | 141 |
| Strain at break [%] | 2.4 | 2.5 | 2.9 | 2.6 | 2.8 | 2.8 | 2.7 | 2.9 |
| E-Modulus | 9650 | 9990 | 9860 | 9660 | 10280 | 9790 | 9420 | 9620 |

| [MPa] | | | | | | | | |
|---|---|---|---|---|---|---|---|---|
| | | | | | | | | |

| **after 96 hours/ 121 °C, PCT** | | | | | | | | |
|---|---|---|---|---|---|---|---|---|
| Stress at break [MPa] | 113 | 121 | 123 | 115 | 126 | 116 | 116 | 120 |
| Retention [%] | 89 | 90 | 89 | 85 | 89 | 84 | 85 | 85 |
| Strain at break [%] | 1.9 | 2.1 | 2.3 | 2.1 | 2.3 | 2.1 | 2.4 | 2.5 |
| Retention [%] | 79 | 84 | 79 | 81 | 82 | 75 | 89 | 86 |
| E-Modulus [MPa] | 8953 | 9450 | 9170 | 8970 | 9580 | 9030 | 8490 | 8670 |
| Retention [%] | 97 | 92 | 93 | 93 | 93 | 92 | 90 | 90 |
| | | | | | | | | |

| **Tracking** | | | | | | | | |
|---|---|---|---|---|---|---|---|---|
| CTI [V] | 300 | 475 | 425 | 525 | 525 | 575 | 500 | 575 |

These results show the improved hydrolytic stability of the formulation "INV", which is according to the present invention and comprises a combination of epoxidized linseed oil, CBA and calcium hydrogen phosphate, compared to reference "REF" and six comparative formulations comprising none (REF), one (examples 1-3) or two (examples 4-6) of epoxidized linseed oil, CBA , and calcium hydrogen phosphate, respectively. As can be seen from the summarized measurements, the mere addition of phosphorus-containing compound calcium phosphate to the reference composition REF in comparative example 1 causes a moderate increase in the comparative tracking index (CTI) value, but this addition has no effect on the hydrolysis resistance as the retention of stress at break after PCT (96 hours, 121 °C) was 89% and 90%, respectively. Similarly, addition of CBA and ELO in comparative examples 2 and 3, respectively, also led to an increase in the CTI value but poor strain at break retention after PCT (96 hours, 121 °C). Addition of both CBA and calcium phosphate in comparative composition 4 gave an increase in the CTI value at the expense of the hydrolytic stability after PCT (96 hours, 121 °C) as evidenced by the decreased strain at break (retention) value. Similarly, addition of both ELO and calcium phosphate in comparative example 5 led to a significant increase in the CTI value at the expense of the hydrolytic stability after PCT (96 hours, 121 °C) as evidenced by the markedly decreased strain at break (retention) value. In principle, the same holds true for the addition of both ELO and CBA in comparative composition 6. By contrast, the stress at break and strain at break values are higher for the composition "INV" according to the invention, especially for the PCT specimens. In particular, it can be seen that the comparative formulation 2, which before PCT was characterized by similar stress at break and strain at break values as the INV composition, showed a significantly lower strain at break value after PCT (96 hours, 121 °C). Also, comparative formulation 2 gave a significantly lower comparative tracking index compared to the INV composition. In fact, comparative composition INV features the highest comparative tracking index together with comparative composition 5, which, however, gave significantly lower stress at break and strain at break values, especially after PCT (96 hours, 121 °C). All in all, only the composition according to the invention features a high comparative tracking index (CTI) rating combined with good hydrolysis resistance, as evidenced by the sustained high stress at break and strain at break values following PCT (96 hours, 121 °C).

## Claims

1. A polymer composition for applications requiring increased hydrolytic stability and/or enhanced comparative tracking indices, the composition comprising at least one semi-aromatic polyester resin, at least one epoxy-containing compound, at least one bis-lactam, and at least one phosphorus-containing compound.

2. The composition according to claim 1, wherein at least one of said epoxy-containing compounds is an epoxidized fatty acid ester, wherein the fatty acid ester is preferably selected from linseed oil, soybean oil, sunflower seed oil, safflower oil, hempseed oil, tung oil, oiticica oil, corn oil, sesame oil, cottonseed oil, castor oil, olive oil, peanut oil, rapeseed oil, coconut oil, babassu oil, palm oil, fish oil, most preferably the epoxidized fatty acid ester is epoxidized linseed oil.

3. The composition according to claim 1 or 2, wherein at least one of said bis-lactams is carbonyl-bis-caprolactam or N,N'-hexane-1,6-diylbis(hexahydro-2-oxo-1H-azepine-1-carboxamide) or both.

4. The composition according to any one of the preceding claims, wherein at least one of said phosphorus-containing compounds is selected from the group consisting of a metal phosphate, a metal phosphonate and a metal phosphinate, preferably at least one of calcium hydrogen phosphate and hydroxyapatite.

5. The composition according to any one of the preceding claims, wherein the total amount of epoxy-containing compounds, in particular of epoxidized fatty acid esters, in the polymer composition is 0.1 to 5 weight percent, preferably 0.5 to 3 weight percent, based on the total weight of the polymer composition, and/or wherein the total amount of bis-lactams, in particular of one or both of carbonyl-bis-caprolactam and N,N'-hexane-1,6-diylbis(hexahydro-2-oxo-1H-azepine-1-carboxamide), in the polymer composition is 0.1 to 5 weight percent, preferably 0.5 to 2 weight percent, based on the total weight of the polymer composition, and/or wherein the total amount of phosphorus-containing compound, in particular of one or both of calcium hydrogen phosphate and hydroxyapatite, in the polymer composition is 0.1 to 5 weight percent, preferably 0.1 to 2.5 weight percent, based on the total weight of the polymer composition.

6. The composition according to any one of the preceding claims, wherein said at least one semi-aromatic polyester resin is/are present in an amount of 40 to 90 weight percent, preferably 50 to 80 weight percent, based on the total weight of the polymer composition.

7. The composition according to any one of the preceding claims, wherein said at least one semi-aromatic polyester resin is selected from the group consisting of polyethylene terephthalate (PET), polybutylene terephthalate (PBT), polyethylene naphthalate (PEN), polycyclohexylenedimethylene terephthalate (PCT), polytrimethylene terephthalate (PTT),and copolyesters thereof, preferably polyethylene terephthalate (PET), polybutylene terephthalate (PBT), and copolyesters thereof.

8. The composition according to any one of the preceding claims, additionally comprising:
- at least one reinforcing agent, preferably in an amount of 5 to 80 weight percent, more preferably of 10 to 50 weight percent, most preferably in an amount of 25 to 40 weight percent, based on the total weight of the polymer composition; and
- Optionally, 0.5 to 15 weight percent, based on the total weight of the polymer composition, of at least one toughening agent.

9. The composition according to claim 8, wherein
- said reinforcing agent is selected from the group consisting of mineral fillers, in particular the mineral filler may be at least one of whiskers, kaolin, calcined kaolin, wollastonite, talc, chalk, glass fibers, glass beads, amorphous silica, asbestos, calcium silicate, calcium metasilicate, magnesium carbonate, powdered quartz, mica, barium sulfate, and feldspar, most preferably glass fibers, and natural fillers, in particular kenaf; and/or
- said toughening agent is selected from the group consisting of glass fibers, methacrylate-butadiene-styrene copolymers, acrylate elastomers, acrylonitrile-styrene-acrylate copolymers, acrylonitrile-butadiene-styrene copolymers, high rubber graft acrylonitrile-butadiene-styrene copolymers, acrylate-olefin copolymers, silicone rubbers, silicone-acrylic rubbers, ethylene-propylene non-conjugated diene elastomers, acrylonitrile-styrene-ethylene-propylene non-conjugated diene elastomers, ethylene-methyl methacrylate-glycidyl methacrylate copolymers, ethylene-n-butyl-acrylate-co-glycidyl methacrylate (EBA-GMA) terpolymer rubber and combinations thereof, preferably said toughening agent is selected from the group consisting of methacrylate-butadiene-styrene copolymers, acrylate-olefin copolymers, ethylene-methyl methacrylate-glycidyl methacrylate copolymers, ethylene-n-butyl-acrylate-co-glycidyl methacrylate (EBA-GMA) terpolymer rubber and combinations thereof.

10. The composition according to any one of the proceeding claims, in particular according to claim 9, wherein the comparative tracking index (CTI) rating, measured by IEC60112, of the polymer composition is at least 450 V, preferably at least 550 V.

11. The composition according to any one of the preceding claims, essentially consisting of:
- 40 to 89 weight percent of at least one semi-aromatic polyester resin;
- 5 to 80 weight percent, preferably 10 to 50 weight percent, most preferably 25 to 40 weight percent, of at least one reinforcing agent, in particular glass fibers;
- 0.1 to 5 weight percent, preferably 0.5 to 2 weight percent, of at least one bis-lactam, in particular carbonyl-bis-caprolactam or N,N'-hexane-1,6-diylbis(hexahydro-2-oxo-1H-azepine-1-carboxamide) or both;
- 0.1 to 5 weight percent, preferably 0.5 to 3 weight percent, of at least one epoxy-containing compound, in particular at least one epoxidized fatty acid ester, preferably epoxidized linseed oil;
- 0.1 to 5 weight percent, preferably 0.1 to 2.5 weight percent, of at least one phosphorus-containing compound, in particular at least one metal phosphate;
- Optionally, 0.5 to 15 weight percent of at least one toughening agent;
each based on the total weight of the polymer composition.

12. A shaped article, in particular bulk material for melting in an extruder, comprising the polymer composition according to any one of claims 1 to 11.

13. An electronic or electrical apparatus containing a component comprising or essentially consisting of the polymer composition according to any one of claims 1 to 11.

14. The apparatus according to claim 13, wherein the apparatus is a charging gun, an inverter, a circuit breaker, a sensor, a relay, a solenoid, a high voltage connector and/or a switch.

15. A method of manufacturing a shaped article comprising a polymer composition according to any one of claims 1 to 11, wherein said epoxidized fatty acid ester, in particular epoxidized linseed oil, and said bis-lactam, in particular carbonyl-bis-caprolactam and/or N,N'-hexane-1,6-diylbis(hexahydro-2-oxo-1H-azepine-1-carboxamide), are added to and melted together with at least one of said at least one semi-aromatic polyester resins, and wherein said at least one phosphorus-containing compound is added to a mixture comprising said epoxidized fatty acid ester, said bis-lactam and said semi-aromatic polyester resin or added to and melted together with at least one of the at least one semi-aromatic polyester resins, preferably said epoxidized fatty acid ester and said bis-lactam are premixed and added to and melted together with at least one of said at least one semi-aromatic polyester resins.

16. The use of a composition according to any one of claims 1 to 11, the composition in particular comprising at least one epoxidized fatty acid ester, at least one of carbonyl-bis-caprolactam and N,N'-hexane-1,6-diylbis(hexahydro-2-oxo-1H-azepine-1-carboxamide), and at least one of calcium hydrogen phosphate and hydroxyapatite, for increasing the hydrolytic stability and/or for enhancing the comparative tracking index (CTI) rating of articles manufactured therefrom.
